# FASCICULE DE BREVET EUROPEEN

(11) **EP 3 283 929 B1**
(45) Date de publication et mention de la délivrance du brevet: **17.08.2022**
(21) Numéro de dépôt: 16720728.1
(22) Date de dépôt: 13.04.2016
(51) Int. Cl.: G05B 19/4065

(54) **PROCÉDÉ DE SURVEILLANCE D'UN PROCÉDÉ DE FRAISAGE**
VERFAHREN ZUR ÜBERWACHUNG EINES FRÄSPROZESSES
METHOD FOR MONITORING A MILLING PROCESS

(30) Priorité: 13.04.2015 FR 1500755
(43) Date de publication de la demande: 21.02.2018
(73) Titulaire: Centre Technique des Industries Mécaniques et du Décolletage, 74300 Cluses (FR)
(72) Inventeur: LAURENT, Patrice, 74250 Viuz en Sallaz (FR); BUSI, Roger, 74800 Saint Laurent (FR)
(74) Mandataire: Fédit-Loriot
(86) Numéro de dépôt international: PCT/EP2016/058140
(87) Numéro de publication internationale: WO 2016/166173

(56) Documents cités:
- DE-A1- 4 405 660
- US-A- 3 784 798
- US-A- 4 417 489
- US-A1- 2013 268 110

## Description

La présente invention se situe dans le domaine de l'usinage et plus particulièrement dans le domaine du fraisage.

Le fraisage consiste à l'enlèvement de matière sous forme de copeaux résultant de la combinaison de deux mouvements : la rotation de l'outil de coupe d'une part, et l'avancée de la pièce à usiner ou de l'outil de coupe d'autre part.

Une fraiseuse de nos jours est équipée d'une unité à commande numérique ce qui permet de réaliser tout type de formes, mêmes complexes.

Lors d'un processus industriel de fraisage, on réalise un nombre élevé de pièces avec une seule fraise.

Dans un souci de productivité et de qualité, il est important de savoir à quel moment il faut remplacer la fraise car celle-ci ne présente plus les caractéristiques requises en termes de coupe et ou de symétrie par exemple pour obtenir des pièces avec une qualité de surface et des dimensions définies à l'avance.

Même en replaçant une fraise par une nouvelle, celle-ci peut présenter un défaut de fabrication qui empêche la réalisation de bonnes pièces, c'est-à-dire des pièces présentant les dimensions requises avec un état de surface acceptable.

Aujourd'hui, le remplacement de la fraise est fait selon l'expérience de l'opérateur de la fraiseuse. Toutefois, par sécurité, celui-ci est amené à changer la fraise par sécurité bien avant que celle-ci soit usée et ne produise des défauts sur les pièces usinées.

Ceci nuit à la productivité globale, du fait du coût d'une nouvelle fraise et car le replacement d'une fraise nécessite un temps d'arrêt de la fraiseuse, ce qui fait chuter la cadence de production.

Par ailleurs, lorsqu'une nouvelle fraise présente un défaut, celui-ci est souvent seulement découvert après la fabrication d'un certain nombre de pièces qui doivent alors être mises au rebut. Ceci présente aussi un certain coût qui réduit la productivité du processus industriel.

Si une fraise est usée et remplacée trop tard, les pièces produites peuvent présenter des défauts, mais aussi la consommation d'énergie électrique d'une fraiseuse avec une fraise usée augmente de manière significative.

Pour remédier à ces inconvénients, il a été proposé de surveiller les processus de fraisage en temps réel par exemple à l'aide d'une platine de mesure de type Kistler (marque déposée) qui permet de mesurer les efforts de coupe selon trois directions d'un repère cartésien : x- l'axe de l'avance, y- l'axe perpendiculaire à l'avance et z-l'axe de rotation de la fraise.

Toutefois, l'analyse des mesures est complexe et difficile et ne permet généralement pas de détecter par exemple une dissymétrie de la fraise.

Selon une autre approche décrite dans DE 9014037 ou US 8,113,066 on équipe la tête de fraisage d'un adaptateur pour mesurer le moment de torsion de la fraise pour surveiller la fraise. Cependant, aucune méthode simple d'analyse permettant de déduire une usure de la fraise nécessitant le changement de celle-ci n'est proposée.

Les documents US 3 784 798 A, US 2013/268 110 A1, US 4 417 489 A et DE 44 05 660 A1 divulguent des procédés de surveillance de machine-outil.

La présente invention a pour objectif de proposer un procédé optimisé de surveillance d'un procédé de fraisage.

A cet effet, l'invention a pour objet un procédé de surveillance selon la revendication 1.

En effet, les inventeurs de la présente invention ont découvert que l'usure ou un défaut d'une fraise se traduit par un changement des valeurs de mesures du moment de flexion de la fraise. Une surveillance d'un paramètre lié au moment de flexion de la fraise permet donc de détecter de façon quantitative l'usure d'une fraise en cours de fonctionnement. En allant plus loin, on peut définir des seuils à ne pas dépasser pour ne pas compromettre la bonne qualité des pièces à usiner et donc pour alerter par exemple un opérateur de changer de fraise ou alors de commander le changement de fraise automatique dans une fraiseuse équipée d'un module de changement automatique de fraise.

Le procédé d'usinage selon l'invention peut en outre présenter une ou plusieurs des aspects suivants, pris seuls ou en combinaison.

Selon un aspect, dans une plage de valeurs angulaires correspondant à une dent de coupe dans un repère tournant de la fraise, on détermine la valeur de mesure maximale du premier paramètre et un critère de surveillance comprend l'évolution temporelle de la valeur de mesure maximale du premier paramètre.

Selon un autre aspect, on détermine la valeur maximale de mesure pour chaque dent de coupe de la fraise.

Selon encore un autre aspect, un critère de surveillance comprend la différence de la valeur maximale de mesure d'une dent de coupe par rapport aux autres dents.

Un autre critère de surveillance peut comprendre le décalage dans le temps de la valeur de mesure maximale du premier paramètre d'au moins une dent de coupe par rapport au second paramètre.

On peut prévoir que dans une plage de valeurs angulaires correspondant à une dent de coupe dans un repère tournant de la fraise, on détermine la valeur de mesure minimale du premier paramètre et un critère de surveillance comprend l'évolution temporelle de la valeur de mesure minimale du premier paramètre.

Selon encore un autre aspect, on détermine la valeur minimale de mesure pour chaque dent de coupe de la fraise.

Encore un autre critère de surveillance peut comprendre la dispersion des valeurs de mesure sur plusieurs tours de fraise du premier paramètre pour au moins une valeur du second paramètre.

On compare au moins un critère de surveillance à un seuil prédéfini et on génère un signal d'alerte en cas de dépassement du seuil.

On peut définir le seuil prédéfini par un processus d'apprentissage.

Le premier paramètre est un moment de flexion de la fraise.

Le second paramètre est une position angulaire de la fraise.

L'invention concerne également un procédé de fraisage automatique avec une fraiseuse équipée d'une part d'une fraise comportant des dents de coupe et d'autre part d'un module de changement automatique de la fraise, caractérisé en ce que l'on met en œuvre un procédé de surveillance tel que défini ci-dessus et on commande un changement automatique de fraise en cas de dépassement d'au moins un seuil prédéfini d'un critère de surveillance.

L'invention concerne en outre un dispositif de surveillance d'un procédé de fraisage selon la revendication 11.

Le dispositif de surveillance comprend par exemple un mandrin de fraise intégrant au moins un capteur de mesure, notamment une jauge de contrainte.

D'autres avantages et caractéristiques apparaîtront à la lecture de la description de l'invention, ainsi que des dessins annexés sur lesquels :
- la figure 1 montre un schéma synoptique d'un dispositif de surveillance selon l'invention pour la mise en œuvre d'un procédé selon l'invention,
- la figure 2 est un schéma explicatif d'un repère tournant de la fraise,
- la figure 3 est un premier exemple d'un diagramme polaire montrant des valeurs de mesure d'un premier paramètre correspondant à une flexion de la fraise en fonction d'un deuxième paramètre correspondant à l'angle de rotation de la fraise,
- la figure 4 est un diagramme bidimensionnel de la figure 3 montrant des valeurs de mesure d'un premier paramètre correspondant à une flexion de la fraise en fonction d'un deuxième paramètre correspondant à l'angle de rotation de la fraise,
- la figure 5 est un second exemple d'un diagramme polaire montrant des valeurs de mesure d'un premier paramètre correspondant à une flexion de la fraise en fonction d'un deuxième paramètre correspondant à l'angle de rotation de la fraise,
- la figure 6 est un diagramme bidimensionnel de la figure 5 montrant des valeurs de mesure d'un premier paramètre correspondant à une flexion de la fraise en fonction d'un deuxième paramètre correspondant à l'angle de rotation de la fraise,
- la figure 7 est un troisième exemple d'un diagramme polaire montrant des valeurs de mesure d'un premier paramètre correspondant à une flexion de la fraise en fonction d'un deuxième paramètre correspondant à l'angle de rotation de la fraise,
- la figure 8 est un quatrième exemple d'un diagramme polaire montrant des valeurs de mesure d'un premier paramètre correspondant à une flexion de la fraise en fonction d'un deuxième paramètre correspondant à l'angle de rotation de la fraise,
- la figure 9 est un cinquième exemple d'un diagramme polaire montrant des valeurs de mesure d'un premier paramètre correspondant à une flexion de la fraise en fonction d'un deuxième paramètre correspondant à l'angle de rotation de la fraise,
- la figure 10 est un diagramme bidimensionnel de la figure 9 montrant des valeurs de mesure d'un premier paramètre correspondant à une flexion de la fraise en fonction d'un deuxième paramètre correspondant à l'angle de rotation de la fraise.

Sur les figures, les éléments identiques sont identifiés par les mêmes références.

Dans la description on peut indexer certains éléments ou paramètres, comme par exemple premier élément ou second élément ainsi que premier paramètre et second paramètre ou encore premier critère et second critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tels critères.

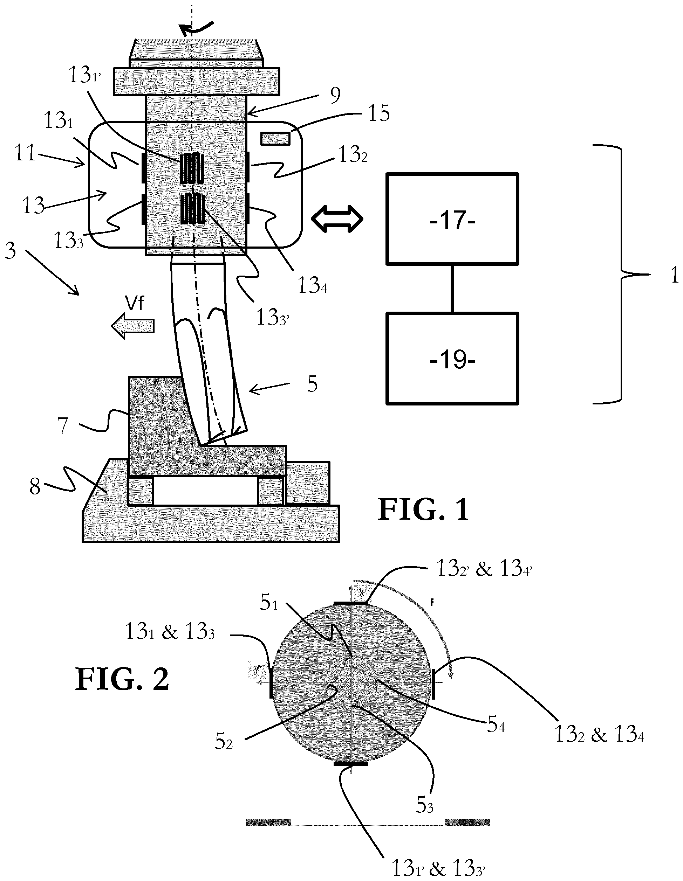

Les figures 1 et 2 montrent un dispositif 1 de surveillance d'un procédé de fraisage d'une fraiseuse équipée d'une fraise 3 comportant des dents de coupe 5, dans le cas présent par exemple quatre dents de coupe 5₁, 5₂, 5₃ et 5₄. De plus, sur la figure 2, on a représenté le repère x', y' de la fraise. Ce repère est fixe par rapport à la fraise et tourne avec celle-ci lors du travail de fraisage.

Une pièce à usiner 7 est serrée dans un étau 8 et la fraise 3 tourne par exemple dans le sens horaire pour enlever de matière par exemple dans une pièce 7 à usiner, par exemple en métal, en avançant avec une vitesse d'avance v_{f} (figure 1) et en tournant avec un nombre de tours N par minute.

La fraise 3 est maintenue dans un mandrin 9 équipé d'au moins un capteur 11 de mesure permettant de mesurer un premier paramètre correspondant à une flexion de la fraise en fonction d'un deuxième paramètre correspondant à l'angle de rotation de la fraise dans un repère tournant de la fraise.

Plus spécifiquement le premier paramètre est par exemple un moment de flexion de la fraise et le second paramètre est la position angulaire de la fraise. Ainsi, à chaque rotation de 360°, on dispose pour chaque position angulaire de la fraise 3 d'une nouvelle valeur de mesure du premier paramètre, c'est-à-dire par exemple du moment de flexion de la fraise 3.

De cette manière, on peut suivre très précisément le moment de flexion de la fraise 3 par exemple en fonction de sa position angulaire et en particulier on peut suivre individuellement le travail de coupe / fraisage de chaque dent 5 de la fraise 3 .

Le capteur 11 de mesure comprend par exemple une ou plusieurs jauges de contraintes 13.

Selon un mode de réalisation représenté sur les figures, le capteur 11 comprend d'une part un premier ensemble de quatre jauges de contrainte 13₁, 13₂, 13₃ et 13₄ et d'autre part un second ensemble de quatre jauges de contrainte 13_{1',} 13_{2'}, 13_{3'} et 13_{4'}. Le premier ensemble comprend deux premières jauges de contrainte 13₁ et 13₃ disposées l'une 13₁ au-dessus de l'autre 13₃ et deux secondes jauges de contrainte 13₂, et 13₄ décalées de 180°, la jauge de contrainte 13₁ étant en vis-à-vis de la jauge de contrainte 13₂ et la jauge de contrainte 13₃ étant en vis-à-vis de la jauge de contrainte 13₄.

Le second ensemble de quatre jauges de contrainte 13_{1'}, 13_{2'}, 13_{3'} et 13_{4'}, est monté de façon similaire au premier ensemble, mais décalé de 90° (voir figure 2). Ainsi, le second ensemble comprend deux premières jauges de contrainte 13_{1'} et 13_{3'} disposées l'une 13_{1'} au-dessus de l'autre 13_{3'} et deux secondes jauges de contrainte 13_{2'}, et 13_{4'}, décalées de 180°, la jauge de contrainte 13_{1'} étant en vis-à-vis de la jauge de contrainte 13_{2'} et la jauge de contrainte 13_{3'} étant en vis-à-vis de la jauge de contrainte 13_{4'}.

Les jauges de contrainte 13₁, 13₂, 13₃ et 13₄ du premier ensemble sont reliées électriquement selon un pont de mesure de Wheatstone pour fournir un premier signal de mesure.

Les jauges de contrainte 13_{1'}, 13_{2'}, 13_{3'} et 13_{4'}, du second ensemble sont également reliées électriquement selon un pont de mesure de Wheatstone pour fournir un second signal de mesure.

Ces jauges de contraintes 13 sont reliées à une première unité électronique 15 de traitement et de transmission sans fil portée par le mandrin 9.

Bien entendu, on peut utiliser d'autres capteurs que des jauges de contrainte pour mesurer un premier paramètre correspondant à une flexion de la fraise sans sortir du cadre de la présente invention.

On peut également augmenter le nombre de jauges de contrainte du capteur de mesure 11.

La première unité électronique 15 communique les valeurs de mesure sans fil à une seconde unité 17 électronique stationnaire de réception et de traitement des valeurs de mesure, notamment d'un point de vue traitement de signal. La seconde unité électronique est reliée à une unité 19 d'analyse les valeurs de mesure en fonction d'au moins un critère de surveillance.

Bien entendu, ces unités 15, 17 et 19 peuvent être réalisées avec des microprocesseurs ou des ASICS et comporter des mémoires et moyens de calculs et d'analyse.

Le dispositif de surveillance 1 et par conséquent le procédé associé de surveillance d'un procédé de fraisage d'une fraiseuse équipée d'une fraise comportant des dents de coupe fonctionnent de la manière suivante :
Selon une première étape, on détermine des valeurs de mesure d'un premier paramètre correspondant à une flexion de la fraise en fonction d'un deuxième paramètre correspondant à l'angle de rotation de la fraise dans un repère tournant de la fraise.

Puis selon une seconde étape, on analyse les valeurs de mesure en fonction d'au moins un critère de surveillance.

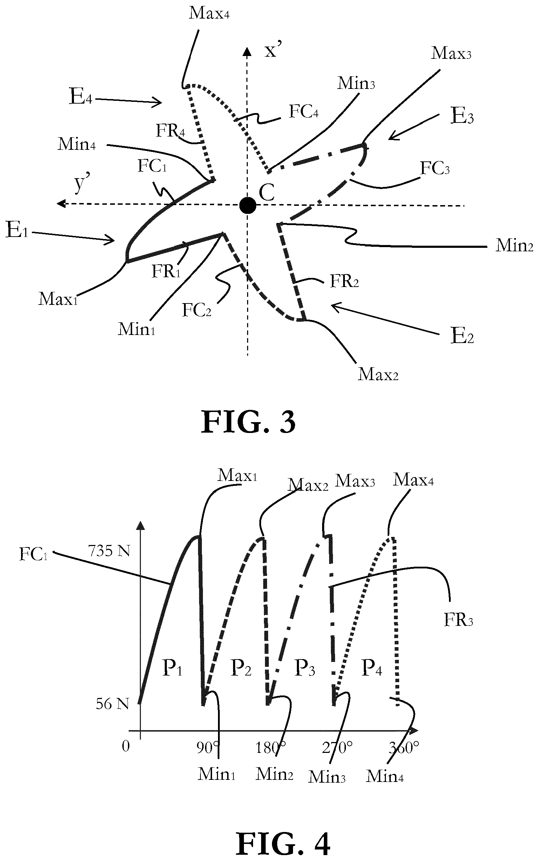

Sur la figure 3 est montré sur un diagramme polaire dans le repère tournant selon les coordonnées x', y' de la fraise un premier exemple de mesure pour une fraise neuve à quatre dents de coupe 5ᵢ (i=1 à 4) sans défaut d'un diagramme polaire montrant des valeurs de mesure d'un premier paramètre correspondant à une flexion de la fraise, ici un moment de flexion, en fonction d'un deuxième paramètre correspondant à l'angle de rotation de la fraise, ici la position angulaire de la fraise.

Le centre du diagramme polaire est marqué de la référence C et les valeurs de mesure des moments de flexion sont représentées par la distance par rapport au centre et en fonction de la position angulaire.

Ainsi on distingue sur le diagramme polaire quatre excroissances E_{1,} E₂, E₃ et E₄ de même forme mais décalées angulairement de respectivement 90°. Chaque excroissance Eᵢ (i=1 à 4) correspond au profil du moment de flexion que laisse chaque dent 5ᵢ de coupe (i=1 à 4) de la fraise 3. Pour mieux distinguer dans les diagrammes et figures qui suivent les mesures correspondant à une dent de coupe 5ᵢ particulière, les mesures pour la dent 5₁ correspondant à l'excroissance E₁ ont été tracées en trait plein, les mesures pour la dent 5₂ correspondant à l'excroissance E₂ ont été tracées en trait-tirets, les mesures pour la dent 5₃ correspondant à l'excroissance E₃ ont été tracées en trait point-tiret, et les mesures pour la dent 5₄ correspondant à l'excroissance E₄ ont été tracées en trait pointillé.

Pour chaque excroissance Eᵢ (i=1 à 4), on distingue un flanc de coupe FCᵢ (i=1 à 4) qui représente comment la dent 5ᵢ entre lors de la rotation de la fraise 3 dans la pièce 7 de matière ce qui augmente progressivement le moment de flexion, jusqu'à atteindre un maximum du moment de flexion Maxᵢ (i=1 à 4), puis un flanc de retour FRᵢ (i=1 à 4) lorsque la dent 5ᵢ sort de la matière ce qui a pour conséquence un relâchement brusque du moment de flexion.

Comme on peut le voir sur la figure 3, le moment de flexion ne tombe jamais à zéro (ce qui correspondrait à ce que la courbe de mesure atteigne le centre C), mais on relève quatre minima du moment de flexion Minᵢ (i=1 à 4). Le minium du moment de flexion Minᵢ est atteint juste avant que la dent de coupe 5ᵢ₊₁ entre dans la matière de la pièce à usiner 7.

La figure 4 est une autre représentation de la figure 3 sous forme d'un diagramme bidimensionnel montrant des valeurs de mesure du moment de flexion de la fraise en fonction de la position angulaire de la fraise 3. Dans le présent cas, les mesures issues des deux ponts de mesure de Wheatstone sont par exemple combinées pour obtenir une résultante de flexion de la fraise 3.

Sur cette figure, chaque pic P₁, P₂, P₃ et P₄ correspond à une des quatre excroissances E₁, E₂, E₃ et E₄ et donc à une dent 5ᵢ particulière. Le tracé de chaque pic Pᵢ correspond à celle de l'excroissance Eᵢ correspondante. On a également indiqué les valeurs Maxᵢ et Minᵢ ainsi qu'à titre d'exemple certains flancs FCᵢ et FRᵢ (i=1 à 4) qui correspondent entre la figure 3 et la figure 4.

Donc on retient que pour une fraise 3 neuve sans défaut, l'allure de chacun des profils de moments de flexion des dents de coupe 5 est quasi identique. En effet, au début du travail de fraisage, la fraise avec ses dents 5 est parfaitement régulière.

On constate en outre que chaque dent de coupe 5ᵢ correspond à une plage de valeurs angulaires dans un repère tournant de la fraise. Ainsi, la dent 5₁ correspond par exemple à la plage de 50° à 140°, la dent 5₂ correspond par exemple à la plage de 140° à 230°, la dent 5₃ correspond par exemple à la plage de 230° à 320°, et la dent 5₄ correspond par exemple à la plage de 320° à 50°.

Au fur et à mesure du travail de fraisage, les dents de coupe 5 vont s'émousser et s'user petit à petit, voire certains défauts peuvent apparaître.

Les inventeurs de la présente invention ont trouvé que l'usure voir des défauts apparaissant sur la fraise 3 peuvent se traduire de différentes manières et en analysant les valeurs de mesure en fonction d'au moins un critère de surveillance, on peut quantifier de façon fiable l'usure de la fraise 3 ou un défaut ce qui permet de procéder à l'échange d'une fraise 3 usée ou défaillante à temps.

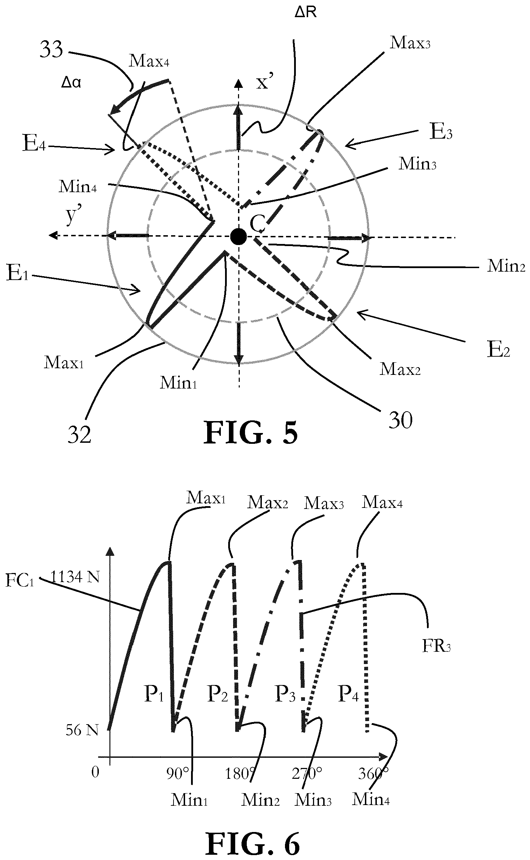

La figure 5 est un second exemple d'un diagramme polaire montrant des valeurs de mesure des moments de flexion de la fraise 3 en fonction de la position angulaire de la fraise 3. Dans ce cas, la fraise 3 a déjà réalisé un travail de fraisage / usinage depuis un certain temps entraînant une certaine usure de la fraise 3, par exemple par émoussement des arrêtes de coupe des dents 5.

On constate que les maxima Maxᵢ sont plus éloignés du centre C du fait que le moment de flexion a augmenté. La fraise 3 doit donc fournir un effort plus important pour enlever de la matière dans la pièce 5.

A titre de comparaison, on a représenté en trait pointillés un cercle 30 dont le diamètre correspond à un cercle passant par tous les maxima Maxᵢ pour une fraise neuve sans défaut.

On voit donc nettement que le cercle 32 pour une fraise présentant une certaine usure s'est agrandi de ΔR par rapport au cercle 30.

On constante le même changement des profils des moments de flexion pour chaque dent de coupe 5ᵢ lorsque l'on passe dans une représentation bidimensionnelle à la figure 6, cette représentation étant similaire à celle de la figure 4.

Ainsi, si on se place dans une plage de valeurs angulaires correspondant à une dent de coupe 5ᵢ dans un repère tournant de la fraise, on peut déterminer la valeur de mesure maximale Maxᵢ du moment de flexion et un premier critère de surveillance est par exemple l'évolution temporelle de la valeur de mesure maximale Maxᵢ du moment de flexion pour au moins une dent de coupe 5, voire toutes les dents de coupe 5.

Lorsque pour une ou pour toutes les dents 5ᵢ un seuil prédéfini d'usure est dépassé, on peut déclencher une alerte pour indiquer à l'opérateur de la fraiseuse qu'il convient de changer de fraise 5. Si la fraiseuse comporte un module de changement automatique de la fraise, le signal d'alerte peut déclencher une commande de changement automatique de fraise en cas de dépassement d'au moins un seuil prédéfini d'un critère de surveillance, comme par exemple une valeur maximale du moment de flexion de la fraise 3 pour une ou pour toutes les dents de coupe 5.

De façon générale, le seuil prédéfini d'un des critères de surveillance décrit dans la présente invention dépend fortement du couple outil-matière, c'est-à-dire de la fraise elle-même, de sa géométrie, de ses revêtements de surface pour ne citer que certains paramètres de la fraise et de la matière à usiner. Pour définir un seuil, on peut passer par un processus d'apprentissage, c'est-à-dire on lance un processus de fraisage en déterminant les valeurs de mesure jusqu'à ce que l'on constate que les pièces usinées ne présentent plus la qualité requise, notamment en termes d'état de surface ou de dimensions et on fixe le seuil un peu en dessous de cette valeur.

Selon une autre approche, le seuil prédéfini correspond par exemple à une variation de 30%, 40% ou 50% (en fonction de la plage de sécurité que l'opérateur souhaite mettre en place) des valeurs de mesure du critère de surveillance considéré. Ainsi si le moment maximal de flexion augmente de 50%, on sait que l'usure de la fraise 3 est trop importante et la fraise 3 doit être changée.

Les inventeurs ont également constaté que non seulement les maxima Maxᵢ s'éloignent du centre C témoignant d'un moment de flexion plus important, mais ils ont découvert un deuxième critère de surveillance qui est le décalage dans le temps de la valeur de mesure maximale du moment de flexion d'au moins une dent de coupe par rapport à la position angulaire.

En effet, sur la figure 4, le maximum du moment de flexion Max₁ pour la dent de coupe 5₁ se situe à environ 120° tandis que dans les figures 5 et 6 le maximum du moment de flexion Max₁ pour la dent de coupe 5₁ se situe à environ 140°. On peut ainsi constater que les plages angulaires correspondant à chaque dent se sont décalées dans le présent cas de Δα d'environ 20° (référence 33) dans le sens antihoraire sur le diagramme polaire de la figure 5. Ce décalage 33 peut s'expliquer par un effort supplémentaire de la fraise 5 pour rentrer dans la matière 7.

Ce décalage 33 est également un critère de surveillance et donc une valeur permettant d'attester de façon quantitative l'usure d'une fraise 5. Lorsque ce décalage 33 dépasse un seuil prédéfini, par exemple 10° voir 15° ou 20°, on déclenche une alerte pour l'opérateur ou, pour une fraiseuse à module de changement automatique, on déclenche une commande de changement de fraise 5.

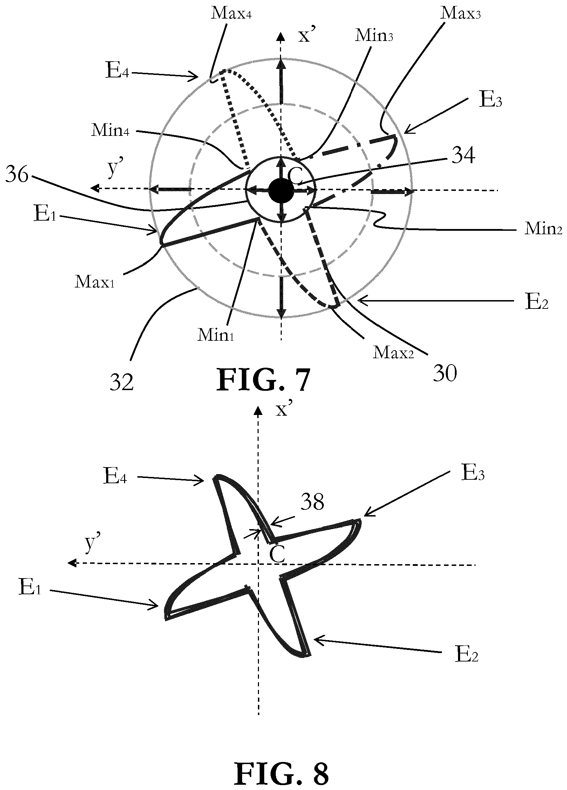

La figure 7 est similaire à celle de la figure 5.

La figure 7 est un autre exemple d'un diagramme polaire montrant des valeurs de mesure des moments de flexion de la fraise 3 en fonction de la position angulaire de la fraise 3. Dans ce cas aussi, la fraise 3 a déjà réalisé un travail de fraisage / usinage depuis un certain temps entraînant une certaine usure de la fraise 3, par exemple par émoussement des arrêtes de coupe des dents 5.

On constate cette fois-ci que les minima Minᵢ sont plus éloignés du centre C. A titre de comparaison, on a représenté en trait pointillés un cercle 34 dont le diamètre correspond à un cercle passant par tous les minima Minᵢ pour une fraise neuve sans défaut.

On voit donc nettement qu'un cercle 36 pour une fraise présentant une certaine usure s'est agrandi par rapport au cercle 34.

En conséquence, l'analyse de l'évolution des valeurs de mesure du moment de flexion peut consister à déterminer la valeur de mesure minimale du moment de flexion pour une ou toute les dents de coupe 5 et un troisième critère de surveillance est par exemple l'évolution temporelle de la valeur de mesure minimale du moment de flexion pour une ou toute les dents de coupe 5. Lorsque cette valeur dépasse un seuil prédéfini pour une ou toute les dents de coupe 5, une alerte est déclenchée ou selon la fraiseuse, un changement automatique de la fraise usée est opéré.

La figure 8 est un quatrième exemple d'un diagramme polaire montrant des valeurs de mesure d'un moment de flexion sur plusieurs tours de la fraise en fonction de la position angulaire de la fraise.

Un autre critère de surveillance est par exemple la dispersion des valeurs de mesure sur plusieurs tours de fraise du premier paramètre pour au moins une valeur du second paramètre.

Cette dispersion est représentative d'instabilité dans le comportement en flexion de la fraise pendant l'usinage et constitue un critère d'appréciation de la surface usinée et de ses défauts liés à l'usinage (phénomène d'ondulation en fraisage sur flanc). La dispersion peut s'évaluer par exemple sous forme d'un écart-type 38 ou d'une variance. Lorsque par exemple l'écart-type dépasse un certain seuil, une alerte est donnée à l'opérateur pour changer l'outil ou alors dans une fraiseuse entièrement automatisée, une commande de changement de fraise est déclenchée.

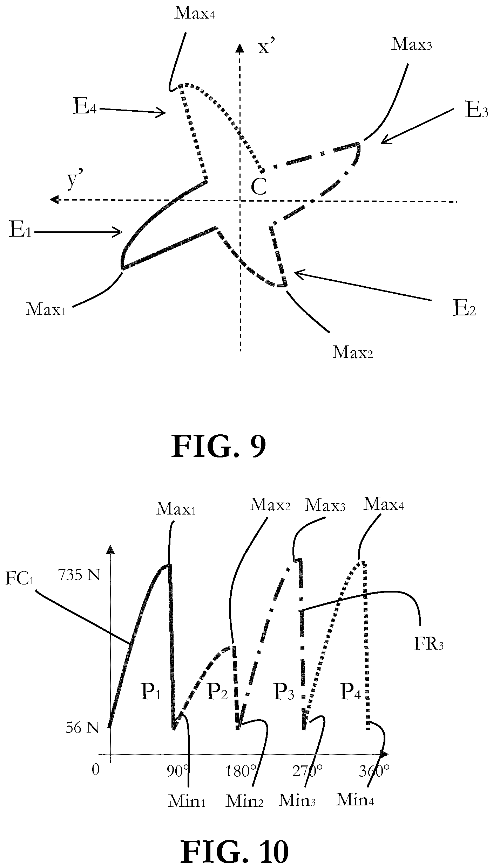

La figure 9 est un cinquième exemple d'un diagramme polaire montrant des valeurs de mesure d'un moment de flexion de la fraise 3 en fonction de sa position angulaire et la figure 10 est un diagramme bidimensionnel de la figure 9.

On constate sur les figures 9 et 10 que le maximum Max₂ de la seconde dent de coupe 5₂ est inférieur aux maximum Maxᵢ (i=1, 3, 4) des autres dents de coupe 5ᵢ (i=1, 3, 4). Il s'agit d'une dysmétrie de la fraise 3 qui peut avoir des conséquences néfastes en termes de qualité de surface de fraisage et induire une instabilité importante de la fraise 3.

Un autre critère de surveillance peut donc être la différence de la valeur maximale de mesure d'une dent de coupe par rapport aux autres dents.

Dès que l'on constate une telle dissymétrie, qui peut aussi résulter d'un défaut de fabrication ou d'une casse partielle d'une dent coupe au cours de l'usinage, une alerte est donnée pour changer la fraise ou commander le changement de fraise.

On comprend donc que le procédé selon l'invention permet de déterminer de façon quantitative l'usure ou le défaut d'une fraise 3 et de procéder à son échange.

Un avantage de ce procédé quantitatif est que la fraise 3 n'est échangée ni trop tôt, ni trop tard.

En effet, si par sécurité on change la fraise 3 trop tôt, il y a un coût pour le changement de la fraise elle-même d'un côté et une baisse de la cadence de production de l'autre côté.

Si on change trop tard, on doit mettre une partie de pièces usinées produites au rebut étant donné qu'elles ne présentent pas les dimensions requises ou une qualité de surface prescrite.

En appliquant le procédé selon l'invention dans une fraiseuse ayant un module de changement, on gagne en productivité.

## Revendications

1. Procédé de surveillance d'un procédé de fraisage d'une fraiseuse équipée d'une fraise (3) comportant des dents de coupe (5), **caractérisé en ce qu'**il comprend les étapes suivantes :
- on mesure un moment de flexion de la fraise (3) en fonction de la position angulaire de la fraise (3) dans un repère tournant de la fraise (3), de manière à suivre individuellement un travail de coupe/fraisage de chaque dent de coupe (5) de la fraise (3),
- on détermine la valeur de mesure maximale du moment de flexion et au moins un critère de surveillance,
- et on analyse les valeurs de mesure pour chaque dent de coupe (5) en fonction dudit au moins un critère de surveillance, en comparant ledit au moins un critère de surveillance à un seuil prédéfini, et on génère un signal d'alerte en cas de dépassement du seuil.

2. Procédé de surveillance selon la revendication 1, **caractérisé en ce que** dans une plage de valeurs angulaires correspondant à une dent de coupe (5) dans un repère tournant de la fraise, on détermine la valeur de mesure maximale du moment de flexion de la fraise (3) et **en ce qu'**un critère de surveillance comprend l'évolution temporelle de la valeur de mesure maximale du moment de flexion de la fraise (3).

3. Procédé de surveillance selon la revendication 2, **caractérisé en ce que** l'on détermine la valeur maximale de mesure pour chaque dent de coupe (5) de la fraise (3).

4. Procédé de surveillance selon la revendication 3, **caractérisé en ce qu'**un critère de surveillance comprend la différence de la valeur maximale de mesure d'une dent de coupe (5) par rapport aux autres dents de coupe (5).

5. Procédé de surveillance selon l'une quelconque des revendications 1 à 4, **caractérisé en ce qu'**un critère de surveillance comprend le décalage dans le temps de la valeur de mesure maximale du moment de flexion de la fraise (3) d'au moins une dent de coupe (5) par rapport à la position angulaire de la fraise (3).

6. Procédé de surveillance selon l'une quelconque des revendications 1 à 5, **caractérisé en ce que** dans une plage de valeurs angulaires correspondant à une dent de coupe (5) dans un repère tournant de la fraise, on détermine la valeur de mesure minimale du moment de flexion de la fraise (3) et **en ce qu'**un critère de surveillance comprend l'évolution temporelle de la valeur de mesure minimale du moment de flexion de la fraise (3).

7. Procédé de surveillance selon la revendication 6, **caractérisé en ce que** l'on détermine la valeur minimale de mesure pour chaque dent de coupe de la fraise (3).

8. Procédé de surveillance selon l'une quelconque des revendications 1 à 7, **caractérisé en ce qu'**un critère de surveillance comprend la dispersion des valeurs de mesure sur plusieurs tours de fraise du moment de flexion de la fraise (3) pour au moins une valeur de la position angulaire de la fraise (3).

9. Procédé de surveillance selon la revendication 8, **caractérisé en ce que** l'on définit le seuil prédéfini par un processus d'apprentissage.

10. Procédé de fraisage automatique avec une fraiseuse équipée d'une part d'une fraise (3) comportant des dents de coupe (5) et d'autre part d'un module de changement automatique de la fraise, **caractérisé en ce que** l'on met en œuvre un procédé de surveillance selon la revendication 9 et on commande un changement automatique de fraise en cas de dépassement d'au moins un seuil prédéfini d'un critère de surveillance.

11. Dispositif de surveillance d'un procédé de fraisage d'une fraiseuse équipée d'une fraise (3) comportant des dents de coupe (5), le dispositif étant agencé pour la mise en œuvre d'un procédé de surveillance selon l'une quelconque des revendications 1 à 9, **caractérisé en ce qu'**il comprend :
- au moins un capteur de mesure (11) d'un moment de flexion de la fraise (3) en fonction de la position angulaire de la fraise (3) dans un repère tournant de la fraise (3), afin de suivre individuellement un travail de coupe/fraisage de chaque dent de coupe (5) de la fraise (3),
- et une unité (19) d'analyse des valeurs de mesure pour chaque dent de coupe (5) en fonction d'au moins un critère de surveillance.

12. Dispositif de surveillance selon la revendication 11, **caractérisé en ce qu'**il comprend un mandrin de fraise (9) intégrant au moins un capteur de mesure (11), notamment une jauge de contrainte (13).

## Patentansprüche

1. Verfahren zum Überwachen eines Fräsprozesses einer Fräsmaschine, die mit einer Schneidezähne (5) umfassenden Fräse (3) ausgestattet ist, **dadurch gekennzeichnet, dass** es die folgenden Schritte umfasst:
- ein Messen eines Biegemoments der Fräse (3) in Abhängigkeit von der Winkelposition der Fräse (3) in einem die Fräse (3) drehenden Bezugspunkt, so dass eine Schneid-/Fräsarbeit jedes Schneidezahns (5) der Fräse (3) individuell überwacht wird,
- ein Bestimmen des maximalen Messwerts des Biegemoments und mindestens eines Überwachungskriteriums,
- und ein Analysieren der Messwerte für jeden Schneidezahn (5) in Abhängigkeit von dem mindestens einen Überwachungskriterium durch Vergleichen des mindestens einen Überwachungskriteriums mit einem vordefinierten Schwellwert, und ein Erzeugen eines Alarmsignals bei einem Überschreiten des Schwellwerts.

2. Überwachungsverfahren nach Anspruch 1, **dadurch gekennzeichnet, dass** in einem Winkelwertebereich, der einem Schneidezahn (5) in einem die Fräse drehenden Bezugspunkt entspricht, der maximale Messwert des Biegemoments der Fräse (3) bestimmt wird und dass ein Überwachungskriterium die zeitliche Entwicklung des maximalen Messwerts des Biegemoments der Fräse (3) umfasst.

3. Überwachungsverfahren nach Anspruch 2, **dadurch gekennzeichnet, dass** der maximale Messwert für jeden Schneidezahn (5) der Fräse (3) bestimmt wird.

4. Überwachungsverfahren nach Anspruch 3, **dadurch gekennzeichnet, dass** ein Überwachungskriterium die Differenz des maximalen Messwerts eines Schneidezahns (5) bezüglich anderer Schneidezähne (5) umfasst.

5. Überwachungsverfahren nach einem der Ansprüche 1 bis 4, **dadurch gekennzeichnet, dass** ein Überwachungskriterium der Zeitversatz des maximalen Messwerts des Biegemoments der Fräse (3) von mindestens einem Schneidezahn (5) bezüglich der Winkelposition der Fräse (3) ist.

6. Überwachungsverfahren nach einem der Ansprüche 1 bis 5, **dadurch gekennzeichnet, dass** in einem Winkelwertebereich, der einem Schneidezahn (5) in einem die Fräse drehenden Bezugspunkt entspricht, der minimale Messwert des Biegemoments der Fräse (3) bestimmt wird und dass ein Überwachungskriterium die zeitliche Entwicklung des minimalen Messwerts des Biegemoments der Fräse (3) umfasst.

7. Überwachungsverfahren nach Anspruch 6, **dadurch gekennzeichnet, dass** der Mindestmesswert für jeden Schneidezahn der Fräse (3) bestimmt wird.

8. Überwachungsverfahren nach einem der Ansprüche 1 bis 7, **dadurch gekennzeichnet, dass** ein Überwachungskriterium die Messwertverteilung auf mehreren Umdrehungen der Fräse des Biegemoments der Fräse (3) für mindestens einen Winkelpositionswert der Fräse (3) umfasst.

9. Überwachungsverfahren nach Anspruch 8, **dadurch gekennzeichnet, dass** der vordefinierte Schwellwert durch einen Lernprozess definiert wird.

10. Automatisches Fräsverfahren mit einer einerseits mit einer Schneidezähne (5) umfassenden Fräse (3) und andererseits mit einem Modul zum automatischen Fräsenwechsel ausgestatteten Fräsmaschine, **dadurch gekennzeichnet, dass** ein Überwachungsverfahren nach Anspruch 9 ausgeführt wird und ein automatischer Fräsenwechsel angeordnet wird, wenn mindestens ein vordefinierter Schwellwert eines Überwachungskriteriums überschritten wird.

11. Vorrichtung zur Überwachung eines Fräsverfahrens einer mit einer Schneidezähne (5) umfassenden Fräse (3) ausgestatteten Fräsmaschine, wobei die Vorrichtung angeordnet ist, um ein Überwachungsverfahren nach einem der Ansprüche 1 bis 9 auszuführen, **dadurch gekennzeichnet, dass** sie umfasst:
- mindestens einen Messsensor (11) eines Biegemoments der Fräse (3) in Abhängigkeit von der Winkelposition der Fräse (3) in einem sich drehenden Bezugspunkt der Fräse (3), um eine Schneide-/Fräsarbeit jedes Schneidezahns (5) der Fräse (3) individuell zu überwachen,
- und eine Einheit (19) zum Analysieren von Messwerten für jeden Schneidezahn (5) in Abhängigkeit von mindestens einem Überwachungskriterium.

12. Überwachungsvorrichtung nach Anspruch 11, **dadurch gekennzeichnet, dass** sie einen Fräsdorn (9) umfasst, der mindestens einen Messsensor (11) enthält, insbesondere einen Dehnungsmesser (13).

## Claims

1. Method for monitoring a milling process of a milling machine equipped with a milling cutter (3) including cutting teeth (5), **characterised in that** it comprises the following steps:
- a bending moment of the milling cutter (3) is measured according to the angular position of the milling cutter (3) in a rotating reference frame of the milling cutter (3), so as to individually follow cutting/milling work of each cutting tooth (5) of the milling cutter (3),
- the maximum measurement value of the bending moment and at least one monitoring criterion are determined,
- and the measurement values are analysed for each cutting tooth (5) according to said at least one monitoring criterion, by comparing said at least one monitoring criterion with a predefined threshold, and an alert signal is generated in the event of the threshold being exceeded.

2. Monitoring method according to claim 1, **characterised in that**, in a range of angular values corresponding to a cutting tooth (5) in a rotating reference frame of the cutter, the maximum measurement value of the bending moment of the milling cutter (3) is determined, and **in that** a monitoring criterion comprises the change over time of the maximum measurement value of the bending moment of the milling cutter (3).

3. Monitoring method according to claim 2, **characterised in that** the maximum measurement value is determined for each cutting tooth (5) of the milling cutter (3).

4. Monitoring method according to claim 3, **characterised in that** a monitoring criterion comprises the difference of the maximum measurement value of a cutting tooth (5) with respect to the other cutting teeth (5).

5. Monitoring method according to any one of claims 1 to 4, **characterised in that** a monitoring criterion comprises the offset in time of the maximum measurement value of the bending moment of the milling cutter (3) of at least one cutting tooth (5) with respect to the angular position of the milling cutter (3) .

6. Monitoring method according to any one of claims 1 to 5, **characterised in that**, in a range of angular values corresponding to a cutting tooth (5) in a rotating reference frame of the milling cutter, the minimum measurement value of the bending moment of the milling cutter (3) is determined, and **in that** a monitoring criterion comprises the change over time of the minimum measurement value of the bending moment of the milling cutter (3).

7. Monitoring method according to claim 6, **characterised in that** the minimum measurement value is determined for each cutting tooth of the milling cutter (3) .

8. Monitoring method according to any one of claims 1 to 7, **characterised in that** a monitoring criterion comprises the dispersion of the measurement values, over a plurality of turns of the milling cutter, of the bending moment of the milling cutter (3) for at least one value of the angular position of the milling cutter (3).

9. Monitoring method according to claim 8, **characterised in that** the predefined threshold is defined by a learning process.

10. Automatic milling process with a milling machine equipped firstly with a milling cutter (3) including cutting teeth (5) and secondly a module for automatic change of the milling cutter, **characterised in that** a monitoring method according to claim 9 is implemented and an automatic change of milling cutter is demanded in the event of at least one predefined threshold of a monitoring criterion being exceeded.

11. Device for monitoring a milling process of a milling machine equipped with a milling cutter (3) including cutting teeth (5), the device being arranged for implementing a monitoring method according to any one of claims 1 to 9, **characterised in that** it comprises:
- at least one sensor (11) for measuring a bending moment of the milling cutter (3) according to the angular position of the milling cutter (3) in a rotating reference frame of the milling cutter (3), in order to individually follow cutting/milling work of each cutting tooth (5) of the milling cutter (3),
- and a unit (19) for analysing the measurement values for each cutting tooth (5) according to at least one monitoring criterion.

12. Monitoring device according to claim 11, **characterised in that** it comprises a milling chuck (9) incorporating at least one measurement sensor (11), in particular a strain gauge (13).
